# EUROPÄISCHE PATENTSCHRIFT

(11) **EP 2 605 038 B1**
(45) Veröffentlichungstag und Bekanntmachung des Hinweises auf die Patenterteilung: **11.02.2015**
(21) Anmeldenummer: 12196522.2
(22) Anmeldetag: 11.12.2012
(51) Int. Cl.: G01S 13/91, G01S 7/40, G08G 1/097

(54) **Verfahren und Vorrichtung zur Erfassung eines Objektes in einem Radarfeld**
Method and device for detecting an object in a radar field
Procédé et dispositif destinés à la détection d'un objet dans un champ radar

(30) Priorität: 14.12.2011 DE 102011056432
(43) Veröffentlichungstag der Anmeldung: 19.06.2013
(73) Patentinhaber: JENOPTIK Robot GmbH, 40789 Monheim am Rhein (DE)
(72) Erfinder: Lehning, Michael Dr., 31137 Hildesheim (DE)
(74) Vertreter: Schaller, Renate

(56) Entgegenhaltungen:
- EP-A1- 0 741 377
- EP-A2- 0 303 847
- EP-A2- 2 341 367
- AT-A1- 507 985

## Beschreibung

Die Erfindung betrifft ein Verfahren zur Erfassung eines Objektes in einem Radarfeld sowie eine Vorrichtung zur Durchführung des Verfahrens.

Es ist aus dem Stand der Technik bekannt, Radarstrahlung zur Erfassung von Geschwindigkeiten sich bewegender Objekte zu nutzen. Ebenso ist die Möglichkeit einer Messung eines Abstands und einer Winkellage eines Objekts bezüglich des Radargerätes mittels Radarstrahlung bekannt.

Insbesondere bei einer Verwendung von mobilen Radargeräten und von Radargeräten, die zur Erfassung und beweiskräftigen Dokumentation von Messdaten verwendet werden, ist deren regelmäßige Überprüfung erforderlich. Es ist bekannt, zum Zweck der Überprüfung und Justierung des Radargerätes einen Simulator in das Radarfeld des zu prüfenden Radargerätes einzubringen und eine bekannte Geschwindigkeit eines imaginären Radarzieles zu simulieren. Ist die Position des Simulators relativ zum Radargerät genau bekannt, kann der Simulator auch zur Überprüfung der Abstands- und Winkelmessfunktionen des Radargerätes verwendet werden.

Simulatoren können mechanisch arbeitende Vorrichtungen sein, in denen sich ein Rotor mit einer bekannten Geschwindigkeit dreht. Ein solcher Simulator ist beispielsweise in der EP 1 750 141 B1 beschrieben. Der Rotor kann mit Rotorblättern versehen sein und ist mit einem Material beschichtet, das für Radarwellen reflektierend ist.

Um Doppler-Signale zu simulieren, sind ebenfalls auf der Verwendung von Rotoren basierende Lösungen bekannt, von denen beispielhaft die US 3,142,059 A und US 4,517,569 A genannt sind. Dabei dreht sich in einem als Reflektor wirkenden Gehäuse ein Rotor, der eine Anzahl von radialen, reflektierenden Strukturen aufweist. Infolge der Gestaltung von Gehäuse, Rotor und reflektierenden Strukturen werden den auf dem Simulator auftreffenden und von diesem reflektierten Radarsignalen ein Doppler-Signal überlagert.

Aus der DE 30 00 876 A ist ein kodierter kohärenter Transponder bekannt, der einen Empfänger und einen Sender enthält. Mittels Empfänger und Sender wird ein Abfragesignal empfangen bzw. ein kohärentes Rückkehrsignal mit einer vorgegebenen kodierten Information gesendet. Mittels einer dazu geeigneten Phasenverschiebungseinrichtung kann dem kohärenten Rückkehrsignal eine komplexe, kodierte Phasenverschiebung aufgeprägt werden, wodurch gleichzeitig eine Anzahl von Dopplerfrequenzen dargestellt werden können. Gemäß der Lehre der DE 30 00 876 A ist je Zeiteinheit ein Rückkehrsignal generiert. Das Rückkehrsignal muss durch einen geeigneten Algorithmus in Komponenten zerlegt und analysiert werden, um erkennen zu können, ob es sich um ein reguläres Signal eines angemessenen Objekts oder um ein anderes Signal handelt. Wird bei der Analyse erkannt, dass in dem Rückkehrsignal mindestens zwei Geschwindigkeiten enthalten sind, ist nicht von einem regulären Signal auszugehen. Erst die Zusammenschau der scheinbaren Doppler-Frequenzen mit ihren relativen Amplituden erlauben eine eindeutige Identifikation des Rückkehrsignals, wobei sich diese Identifikation darauf beschränkt festzustellen, dass das jeweilige Rückkehrsignal von dem Transponder stammt. Daher bedarf es zur Verwendung der Lösung nach der DE 30 00 876 A eines recht bedeutenden geräte- und rechentechnischen Aufwandes.

Ein Simulator, der zum Empfang eines Radarsignals und zu dessen gezielter Modulation mit einer Doppler-Frequenz geeignet ist, ist in der GB 2464780 A beschrieben. Durch das modulierte Signal ist ein sich bewegendes Objekt simuliert. Ein Benutzer kann dabei die Länge des simulierten Objektes auswählen, wodurch eine Simulation von Objekten, beispielsweise von Fahrzeugen, unterschiedlicher Größe und Klassenzugehörigkeit, z. B. Pkw, Lkw oder Fahrzeuge mit Anhänger. Der Simulator kann mit einem Radargerät zusammen verwendet werden, dass sich auf einer anderen Seite einer Fahrbahn als der Simulator befindet.

In allen bekannten technischen Lehren des Standes der Technik werden derartige Simulatoren dazu verwendet, eine korrekte Installation von Radarsensoren in einem Radargerät sowie die Einhaltung zulässiger Abweichungen von mit dem Radargerät durchgeführten Geschwindigkeitsmessungen zu überprüfen.

Sollen bei dem Betrieb eines Radargerätes weitere Informationen, z. B. die aktuellen Schaltzustände einer verkehrsleitenden Signaleinrichtung (fortan kurz: Signaleinrichtung) wie einer Lichtzeichenanlage (z. B. die Schaltzustände "Rot", "Gelb", "Grün"), die variabel durch ein Wechselverkehrszeichen (fortan: Matrixzeichen) angezeigte zulässige Höchstgeschwindigkeit oder ein durch eine sonstige Signaleinrichtung angezeigtes Ge- oder Verbot berücksichtigt werden, so werden diese Informationen direkt an das Radargerät übermittelt. Da ein Radargerät üblicherweise in einem größeren Abstand von der jeweiligen Signaleinrichtung angeordnet ist, werden die Informationen, beispielsweise über die aktuellen Schaltzustände der Signaleinrichtung, über bedrahtete oder unbedrahtete Datenleitungen an das Radargerät übermittelt. Bedrahtete Datenleitungen sind insbesondere dann nachteilig, wenn eine größere Entfernung zu überwinden ist oder gar Fahrbahnen zwischen der Signaleinrichtung und dem Radargerät liegen. Die Übertragungsqualität unbedrahteter Datenleitungen, insbesondere bei Funkübertragung, kann bei größeren Übertragungsdistanzen durch umgebende Gebäude, fließenden Verkehr und andere Störquellen erheblich beeinträchtigt sein.

Ein in der Offenlegungsschrift EP 0 741 377 A1 offenbartes System zur Überwachung des Straßenverkehrs erfasst mittels Sensoren am Straßenverkehr teilnehmende Objekte. Bei einem Regelverstoß eines der Objekte werden auswertbare Daten und eine Abbildung des Objekts erfasst und an eine vom System entfernt liegende Erfassungsstation zur Speicherung oder weiteren Auswertung übertragen.

In der Offenlegungsschrift EP 0 303 847 A2 wird eine modular aufgebaute und in einem stationären Gehäuse eingesetzte Vorrichtung zur Verkehrsüberwachung mit einer Aufnahmekamera und einer Steuer- und Auswerteeinheit beschrieben. Um die Vorrichtung in an verschiedenen Einsatzorten aufgestellte stationäre Gehäuse einsetzen zu können, sind die für den Einsatzort spezifischen Daten in einem gehäusefesten Datenspeicher abgelegt. Diese Daten werden beim Einsetzen der Vorrichtung in das Gehäuse automatisch an diese übertragen.

Mit einem in der Offenlegungsschrift EP 2 341 367 A2 beschriebenen Verfahren zur Erfassung von Verkehrsverstößen im Ampelbereich lassen sich mehrere Fahrspuren bei hoher Verkehrsdichte überwachen. Dazu wird ein den Ampelbereich erfassendes Radargerät mit einem in bekannter Relativlage zum Radargerät arbeitenden Laserscanner zur Überwachung von Haltelinien ergänzt. Der Laserscanner wird von der Ampel während der Rotlichtphase aktiviert und steht über eine Rechen- und Speichereinheit mit dem Radargerät in Verbindung. Durch den Laserscanner lassen sich Rotlichtverstöße von Fahrzeugen auch dann feststellen, wenn diese durch andere Fahrzeuge für die Radarstrahlung abgeschattet werden.

Die Offenlegungsschrift AT 507 985 A1 offenbart ein Verfahren zur Überwachung einer Kreuzung mit Signalanlage, in dem in Abhängigkeit von der Signalanlage wenigstens ein elektromagnetisch abstrahlender Sensor das Einfahren von Fahrzeugen in den Kreuzungsbereich überwacht. Zusätzlich zu den Reflexionssignalen von den Fahrzeugen werden von der Signalanlage über eine Steuerleitung Zustandsinformationen an den Sensor übermittelt.

Der Erfindung liegt die Aufgabe zugrunde, für ein Verfahren zur Erfassung eines Objektes in einem Radarfeld sowie eine Vorrichtung zur Durchführung des Verfahrens eine neue Möglichkeit zur Informationsübermittlung an ein Radargerät vorzuschlagen.

Die Aufgabe der Erfindung wird durch ein Verfahren zur Erfassung eines Objektes in einem Radarfeld gelöst, für dessen Durchführung in einem Radarfeld eines Radargerätes, welches mit einem Radarsender und einem Radarempfänger ausgestattet ist, ein Simulator ortsfest angeordnet ist. Der Simulator ist dazu geeignet, ein durch zeitlich aufeinanderfolgende Geschwindigkeitsänderungen bestimmtes Geschwindigkeitsprofil zu simulieren. Er wird so angesteuert, dass er wenigstens ein vorgegebenes, untypisches Geschwindigkeitsprofil simuliert, welches keinem zu erwartenden, sich bewegenden Objekt zugeordnet werden kann. Der Radarempfänger empfängt daher zusätzlich zu Reflektionssignalen von sich durch das Radarfeld hindurch bewegenden Objekten auch durch den Simulator verursachte Simulatorsignale. Aus diesen wird eine, dem untypischen Geschwindigkeitsprofil zugeordnete, Zustandsinformation abgeleitet.

Kern der Erfindung ist es, durch eine gezielte Ansteuerung des Simulators solche Geschwindigkeitsprofile zu simulieren, die von einem erwarteten und zu erfassendem Objekt, z. B. einem Fahrzeug, nicht hervorgerufen werden können. Mittels solch untypischer Geschwindigkeitsprofile werden bestimmte Informationen, beispielsweise ein aktueller Schaltzustand einer Signaleinrichtung, kodiert und an das Radargerät übermittelt.

Dabei ist es von großem Vorteil, dass mit dem gleichen Simulator auch solche Geschwindigkeitsprofile simuliert werden können, die zur Überprüfung des Radargerätes genutzt werden können. Das Radargerät kann daher bei seiner Inbetriebnahme und auch während seines Betriebs überprüft werden, indem für eine Überprüfung geeignete Geschwindigkeiten, beziehungsweise Geschwindigkeitsprofile (verallgemeinernd als Prüfgeschwindigkeiten bezeichnet), simuliert werden. Unter Simulatorsignalen sind nachfolgend sowohl Prüfgeschwindigkeiten als auch untypische Geschwindigkeitsprofile zu verstehen.

Ein Geschwindigkeitsprofil im Sinne dieser Beschreibung ist eine bestimmte Abfolge von simulierten Geschwindigkeiten, wobei auch die jeweilige Simulationsdauer jeder Geschwindigkeit bestimmt ist. Es können außerdem die Dauer und die Form der simulierten Übergänge zwischen den jeweiligen Geschwindigkeiten (z. B. Rechteckfunktion, Dreiecksfunktion sowie deren Anstiege) bestimmt sein und zur Beschreibung und Erkennung eines Geschwindigkeitsprofils dienen. Ein Geschwindigkeitsprofil kann aus einer vorbestimmten Anzahl und Abfolge von simulierten Geschwindigkeiten bestehen. Das Vorstehende gilt auch für untypische Geschwindigkeitsprofile.

Unter Signaleinrichtungen werden nachfolgend alle Einrichtungen verstanden, durch die optische und/oder akustische Informationen bereitgestellt werden und durch die Ge- oder Verbote an Verkehrsteilnehmer übermittelt werden.

In einer bevorzugten Ausführung des erfindungsgemäßen Verfahrens ist das untypische Geschwindigkeitsprofil durch sich sprunghaft ändernde Geschwindigkeiten bestimmt. Beispielsweise können bestimmte Abfolgen von Geschwindigkeiten, und damit einhergehend eine bestimmte Abfolge von Geschwindigkeitsänderungen, simuliert werden, die aufgrund der verfügbaren Antriebs- und Bremsleistungen der Fahrzeuge, der Reaktionszeiten der Fahrzeugführer oder anderer technischer und physikalischer Restriktionen durch ein reales Fahrzeug gar nicht erreicht werden können. Es ist beispielsweise möglich, innerhalb von Sekundenbruchteilen alternierend gleiche Geschwindigkeitsänderungen von jeweils 50 km/h zu simulieren. Es ist auch möglich, voneinander verschiedene Geschwindigkeitsänderungen zu simulieren sowie die zeitliche und betragsmäßige Abfolge sowie die Anzahl der simulierten Geschwindigkeitsänderungen einer Abfolge von simulierten Geschwindigkeitsänderungen anders als vorstehend genannt zu gestalten.

Durch eine solche Ausgestaltung des Verfahrens ist es vorteilhaft möglich, Zustandsinformationen aus solchen Simulatorsignalen abzuleiten, die innerhalb einer, auf den bestimmungsgemäßen Betrieb optimierten, Empfindlichkeit des Radarempfängers liegen. Insbesondere kann ein untypisches Geschwindigkeitsprofil mittels solcher Geschwindigkeiten simuliert werden, die innerhalb eines vorgesehenen Messbereichs des Radargerätes liegen. Beispielsweise kann der Messbereich eines Radargerätes für Geschwindigkeiten zwischen 20 und 300 km/h ausgelegt sein. Das untypische Geschwindigkeitsprofil wird dann mit aus diesem Geschwindigkeitsbereich ausgewählten Geschwindigkeiten simuliert. Dadurch ist eine Verwendung von üblichen Radargeräten möglich und es kann auf Zusatzgeräte oder auf Sensoren der Radarempfänger mit überdimensionierter Empfindlichkeit zur Erfassung untypischer Geschwindigkeitsprofile verzichtet werden. Zudem kann ein zu simulierendes untypisches Geschwindigkeitsprofil vorteilhaft individuell anhand der technischen Charakteristik des Radargerätes festgelegt werden.

Das erfindungsgemäße Verfahren ist auch zur Detektion von Objekten geeignet, die sich in einer Sichtstrecke zwischen dem Radargerät und dem Simulator befinden. Werden Simulatorsignale unverändert, z. B. mit unveränderten Geschwindigkeiten, Abständen und/oder Winkeln, empfangen, wird daraus die Zustandsinformation abgeleitet, dass sich kein Objekt in der Sichtstrecke zwischen dem Radargerät und dem Simulator befindet. Entsprechend wird bei Nichtempfang von Simulatorsignalen die Zustandsinformation abgeleitet, dass sich wenigstens ein Objekt in der Sichtstrecke befindet. Einem Nichtempfang ist auch eine Abschwächung der Simulatorsignale unter einen bestimmten Schwellenwert gleichzustellen. Es ist damit möglich, Simulator und Radargerät auch als Lichtschranke zu verwenden. Dabei können neben sich bewegenden Objekten auch ruhende Objekte erfasst werden.

Die Sichtstrecke ist in einer einfachen Ausgestaltung der Erfindung die gedachte, direkte Verbindung zwischen Simulator und Radargerät. Sie kann in weiteren Ausführungen auch durch einen oder mehrere Reflektoren umgelenkt sein, sodass die Sichtstrecke zwischen Simulator und Radargerät mindestens eine Richtungsänderung erfährt.

Um Objekte unterschiedlicher Größenklassen detektieren zu können, kann der Verlauf der Sichtstrecke so eingerichtet werden, dass die Höhe der Sichtstrecke einer Höhe der zu detektierenden Objekte (z. B. Lastkraftwagen und Busse) entspricht. Beispielsweise kann der Simulator am Rand einer zu überwachenden Fahrbahn und in einem oberen Bereich des Radarfeldes in einer solchen Höhe angeordnet sein, die oberhalb der größten Höhe eines durchschnittlichen Pkws, aber unterhalb der größten Höhe eines durchschnittlichen Lkws oder Busses liegt. Die Sichtstrecke verläuft vom Radargerät ansteigend zum Simulator und wird nur dann unterbrochen, wenn sich ein entsprechend hohes Objekt in der Sichtstrecke befindet. Dabei ist zu gewährleisten, dass die Sichtstrecke nicht nahe des Radargerätes durch ein Objekt geringer Höhe unterbrochen wird.

Es ist auch möglich, die Sichtstrecke vom Radargerät zum Simulator absteigend oder horizontal zu gestalten.

Das Verfahren kann auch dazu verwendet werden, aus dem Empfang unbestimmt veränderter Simulatorsignale die Zustandsinformation abzuleiten, dass eine Dejustierung in der Anordnung von Radargerät und Simulator erfolgt ist. Eine unbestimmte Veränderung der Simulatorsignale ist beispielsweise eine nicht vorgesehene und andauernde Veränderung des Winkels, unter dem die Simulatorsignale empfangen werden.

Eine solche Dejustierung kann beispielsweise durch eine unbeabsichtigte Veränderung der Stellung des Radargerätes oder durch gezielte Manipulationen an dem Radargerät beziehungsweise dem Simulator verursacht werden.

In einer bevorzugten Ausführung des erfindungsgemäßen Verfahrens wird der Simulator in zeitlicher Übereinstimmung mit sich ändernden Schaltzuständen einer Signaleinrichtung gezielt zur Simulation unterschiedlicher Geschwindigkeitsprofile angesteuert, um aus den unterschiedlichen Simulatorsignalen als Zustandsinformation die unterschiedlichen Schaltzustände ableiten zu können. So kann einem ersten Schaltzustand, z. B. "Rot" einer Lichtzeichenanlage, ein erstes untypisches Geschwindigkeitsprofil zugeordnet sein, während einem zweiten Schaltzustand (z. B. "Grün") ein zweites untypisches Geschwindigkeitsprofil zugeordnet ist.

Jedem untypischen Geschwindigkeitsprofil ist je ein Schaltzustand der Signaleinrichtung zugeordnet und die Zuordnung ist wiederholt abrufbar hinterlegt. Dadurch ist allein aufgrund der Zuordnung der untypischen Geschwindigkeitsprofile zu den Schaltzuständen eine Aussage zum aktuell vorliegenden Schaltzustand möglich.

In Abhängigkeit von den abgeleiteten Zustandsinformationen wird in einer weiteren Ausführung des erfindungsgemäßen Verfahrens eine Kamera dann aktiviert, wenn der Radarempfänger Reflektionssignale empfängt. Durch eine solche Ausgestaltung des Verfahrens ist eine Verwendung zur Bewegungsmeldung erzielt.

Die Verwendung zur Bewegungsmeldung ist beispielsweise dann vorteilhaft, wenn durch die Signaleinrichtung ein Verbot, z. B. ein Durchfahrtsverbot, signalisiert ist und eine unzulässige Durchfahrt eines Fahrzeugs erfasst werden soll.

Die unterschiedlichen Schaltzustände einer Anzeige einer Signaleinrichtung können in weiteren Ausführungen des Verfahrens unterschiedliche zulässige Höchstgeschwindigkeiten betreffen. Die unterschiedlichen Simulatorsignale stehen hier für unterschiedliche zulässige Höchstgeschwindigkeiten und können mit Geschwindigkeiten verglichen werden, die aus den Reflektionssignalen abgeleitet wurden.

Es ist in weiteren Ausgestaltungen des Verfahrens auch möglich, dass nach der Erfassung eines untypischen Geschwindigkeitsprofils die Simulation durch den Simulator gänzlich beendet wird und bis zur Simulation eines weiteren untypischen Geschwindigkeitsprofils eine Messung nach dem Stand der Technik erfolgt. Die Beendigung der Simulation erfolgt vorzugsweise nach einer vorbestimmten Dauer der Simulation.

Ergibt ein Vergleich der zulässigen Höchstgeschwindigkeit mit der gemessenen Geschwindigkeit eine Überschreitung der zulässigen Höchstgeschwindigkeit, wird die Kamera angesteuert und das Objekt erfasst. Es ist auch eine Ansteuerung der Kamera unabhängig von einer Überschreitung der zulässigen Höchstgeschwindigkeit, beispielsweise zur Erfassung des Verkehrsflusses und der durchfahrenden Fahrzeugtypen möglich.

Es ist in einer weiteren Ausgestaltung des erfindungsgemäßen Verfahrens möglich, dass mehrere Radargeräte verwendet werden, deren Radarfelder sich überlagern, um unabhängig von möglichen Abschattungen immer Reflektionssignale zu erhalten, wenn ein Fahrzeug den sich überlagernden Bereich der Radarfelder durchfährt. Der Simulator ist dann so angeordnet, dass die Radarempfänger der mehreren Radargeräte die Simulatorsignale detektieren.

Die Aufgabe der Erfindung wird weiterhin durch eine Anordnung zur Durchführung des erfindungsgemäßen Verfahrens mit einem ortsfest angeordneten Radargerät mit einem Radarsender und einem Radarempfänger gelöst. Durch das Radargerät ist ein Radarfeld festgelegt, in dem ortsfest ein Simulator angeordnet ist, der gemeinsam mit dem Radargerät eine Sichtstrecke bildet und der zur Simulation wenigstens eines vorgegebenen, untypischen Geschwindigkeitsprofils, welches keinem zu erwartenden, sich bewegenden Objekt zugeordnet werden kann und welches durch zeitlich aufeinanderfolgende Geschwindigkeitsänderungen bestimmt ist. Außerdem ist eine Simulatorsteuerung zur Ansteuerung des Simulators zur Simulation verschiedener vorgegebener Geschwindigkeitsprofile vorhanden.

Vorzugsweise steht die Simulatorsteuerung mit einer Signaleinrichtung in Verbindung, die verschiedene Schaltzustände aufweisen kann. Die Simulatorsteuerung ist so ausgelegt, dass der Simulator zeitgleich mit der Änderung des Schaltzustandes ansteuerbar ist, um bei unterschiedlichen Schaltzuständen unterschiedliche untypische Geschwindigkeitsprofile zu simulieren.

Die Simulatorsteuerung kann in einer Ausführung der erfindungsgemäßen Anordnung in dem Simulator integriert oder mit diesem verbunden sein. Dadurch ist vorteilhaft ein kurzer Übertragungsweg zwischen Simulatorsteuerung und Signaleinrichtung erreichbar. Die Simulatorsteuerung steht vorzugsweise drahtlos mit einer Sendeeinrichtung der Signaleinrichtung in Verbindung.

In einer bevorzugten Ausführung der erfindungsgemäßen Anordnung ist eine in das Radarfeld gerichtete Kamera, z. B. eine Videokamera oder eine CCD-Kamera, zur Aufnahme von Bildern vorhanden und durch eine Steuerung, die mit dem Radargerät signaltechnisch verbunden ist, ansteuerbar.

Die Übermittlung der Information von der Signaleinrichtung an den Simulator kann über bedrahtete oder unbedrahtete Datenleitungen erfolgen. Da der Simulator vorzugsweise nahe (z. B. weniger als 5 m entfernt) der Signaleinrichtung aufgestellt ist, sind lediglich kurze Datenleitungen erforderlich. Von Vorteil ist, dass diese kurzen Datenleitungen gegenüber längeren Übertragungswegen weniger störanfällig und einfacher zu handhaben sind. Es kann auf bedrahtete oder auf Funk basierende Datenleitungen zwischen der Signaleinrichtung und dem Radargerät verzichtet werden.

In einer Weiterbildung der erfindungsgemäßen Anordnung ist in der Sichtstrecke zwischen Radargerät und Simulator mindestens ein Reflektor angeordnet. Dieser Reflektor kann z. B. ein für Radarstrahlung reflektierender Spiegel oder ein Retroreflektor sein.

Durch diesen mindestens einen Reflektor kann die Sichtstrecke mindestens einfach gefaltet sein. Ein Anteil der Radarstrahlung des Radarfeldes wird durch den mindestens einen Reflektor reflektiert, wobei durch die reflektierte Radarstrahlung ein weiteres (fortan verallgemeinernd: zweites) Radarfeld bestimmt ist.

Durch eine entsprechende Positionierung mehrerer Reflektoren kann die Sichtstrecke auch in Form eines Vorhangs aus zweiten Radarfeldern mehrfach gefaltet und aufgefächert sein. Durch den Vorhang aus zweiten Radarfeldern ist ein großer horizontaler Bereich geschaffen, in dem Bewegungen detektierbar sind, wenn in einem zweiten Radarfeld ein Simulator angeordnet ist. Wird der Empfang von Simulatorsignalen unterbrochen oder die Simulatorsignale bis unter einen Schwellenwert abgesenkt, so ist ableitbar, dass sich ein Objekt an irgendeiner Stelle in der Sichtstrecke zwischen Radarempfänger und Simulator befindet. Mit einer solchen Verwendung von Radargerät und Simulator als Lichtschranke ist ein großer horizontaler Bereich mit Distanzen bis 100 m und mehr überwachbar. Die Information über den Aufenthalt eines Objektes in der Sichtstrecke kann bei Verwendung eines frequenzmodulierten Dauerstrichradars (frequency modulated continuous wave) mit Frequenzumtastung (frequency shift keying, FMCW-FSK) Aufschluss über stehende Fahrzeuge liefern, die ansonsten nur mit FMCW ohne FSK erfassbar sind.

Es ist auch möglich, aus der Dauer des Verweilens eines Objektes in der Sichtstrecke und der aus den Reflektionssignalen abgeleiteten Geschwindigkeit des Objektes Rückschlüsse auf die Länge des Objektes zu ziehen.

Es ist in weiteren Ausführungen der erfindungsgemäßen Anordnung auch möglich, das Radarfeld in vertikaler Richtung zu falten. In einer solchen Ausführung kann der Simulator auch über dem Radargerät angeordnet sein.

Die erfindungsgemäße Anordnung ist zur Erfassung von in der Sichtstrecke befindlichen Objekten, z. B. von Fahrzeugen oder Personen, verwendbar. Sie ist außerdem zur Erfassung und Dokumentation von Positionen und Geschwindigkeiten von mindestens einem im Radarfeld befindlichem Objekt geeignet. Es ist möglich, die Anordnung zur Zählung des Verkehrs zu verwenden. Das erfindungsgemäße Verfahren und die erfindungsgemäße Anordnung sind für Radargeräte unterschiedlicher Funktionsweise, z. B. Pulsradar, Dauerstrichradar (continuous wave, CW), frequenzmoduliertes Dauerstrichradar (FMCW) und frequenzmoduliertes Dauerstrichradar mit Frequenzumtastung (FMCW-FSK) verwendbar. Durch die Verwendungsmöglichkeit des Verfahrens und der Anordnung als Lichtschranke wird besonders vorteilhaft erreicht, dass auch Radargeräte des Typs FMCW-FSK zur Erfassung stehender Objekte eingesetzt werden können.

Nachfolgend wird die Erfindung anhand von Verwendungs- und Ausführungsbeispielen sowie von Abbildungen näher erläutert. Es zeigen die Abbildungen:
- Fig. 1: eine erste erfindungsgemäße Anordnung mit einem Simulator;
- Fig. 2: eine zweite erfindungsgemäße Anordnung mit einem Simulator und einem Reflektor;
- Fig. 3: eine dritte erfindungsgemäße Anordnung mit einem Simulator in einem zweiten Radarfeld und
- Fig. 4: eine vierte erfindungsgemäße Anordnung mit einem erhöht angeordneten Simulator.

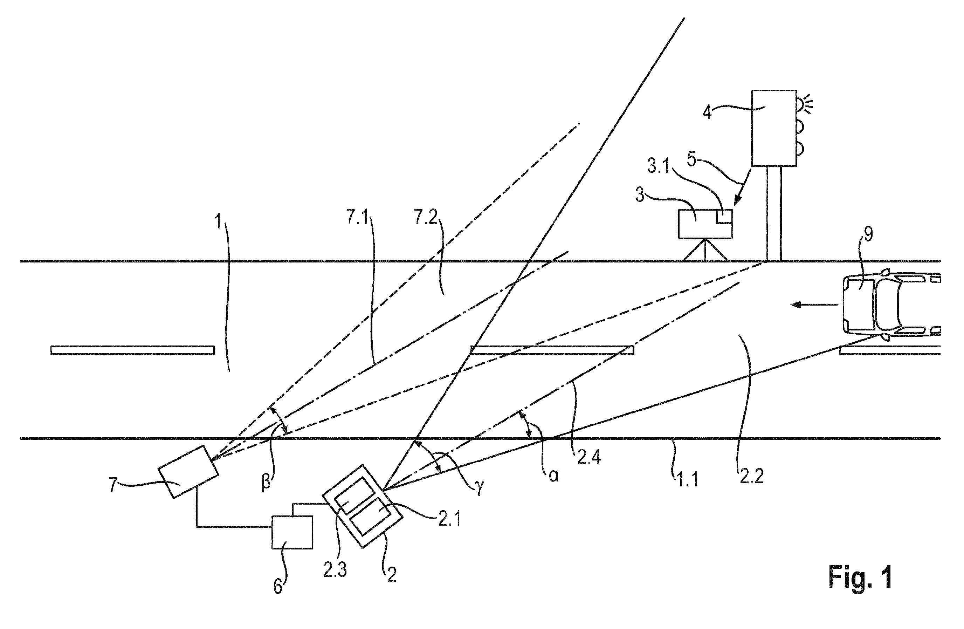

Eine in Fig. 1 gezeigte erste Ausführung einer erfindungsgemäßen Anordnung umfasst im wesentlichen ein Radargerät 2 mit einem Radarsender 2.1, zum Aussenden von Radarstrahlung, einen Radarempfänger 2.3 zum Empfang reflektierter Radarstrahlung in Form von Reflektionssignalen und einen Simulator 3. Der Radarsender 2.1 und der Radarempfänger 2.3, bzw. genauer deren Sende- und Empfangsflächen, sind so dicht beieinander angeordnet, dass deren Achsen quasi eine gemeinsame Radarachse 2.4 bilden, um die sich ein Radarfeld 2.2 ausbildet, dessen Größe durch den horizontalen Abstrahlwinkel γ sowie die Sendeleistung des Radarsenders 2.1 und Empfindlichkeit des Radarempfängers 2.3 bestimmt ist.

Das Radargerät 2 ist am Rand 1.1 einer Fahrbahn 1 unter einem Ausrichtwinkel α zwischen Radarachse 2.4 und Rand 1.1 der Fahrbahn 1 aufgestellt. Die Größe des Ausrichtwinkels α ist abhängig vom jeweils verwendeten Typ des Radargeräts 2 und den jeweiligen Vorschriften zur Durchführung einer verwertbaren Messung. Das Radarfeld 2.2 wird in Form einer Radarkeule (hier vereinfacht als Winkelbereich gezeigt) ausgestrahlt und reicht über einen Teil der Fahrbahn 1. Auf der dem Radargerät 2 gegenüberliegenden Seite der Fahrbahn 1 ist der Simulator 3 so aufgestellt, dass von dem Simulator 3 Radarstrahlung, die auf den Simulator 3 auftrifft und durch diesen verändert wird, als Simulatorsignale auf den Radarempfänger 2.3 zurück reflektiert wird. Der Simulator 3 weist eine Simulatorsteuerung 3.1 auf, die über eine unbedrahtete Datenleitung 5 (durch einen Pfeil symbolisiert) mit einer Lichtzeichenanlage als Signaleinrichtung 4 verbunden ist.

Der Radarempfänger 2.3 ist mit einer als Speicher- und Steuereinheit ausgebildeten Steuerung 6 verbunden, durch die vom Radarempfänger 2.3 empfangene Reflektionssignale und/oder Simulatorsignale auswertbar, in Datenpakete umwandelbar und speicherbar sind. Die Steuerung 6 ist mit einer Kamera 7 verbunden. Die Kamera 7 ist so ausgerichtet, dass eine Kameraachse 7.1 der Kamera 7 unter einem Winkel in den Bereich des Radarfeldes 2.2 ausgerichtet ist. Durch einen Öffnungswinkel β der Kamera 7 ist um die Kameraachse 7.1 ein Objektfeld 7.2 bestimmt (gestrichelt angedeutet), das teilweise mit dem Radarfeld 2.2 überlappen kann.

Um das erfindungsgemäße Verfahren mittels einer ersten Anordnung gemäß Fig. 1 durchzuführen, wird mittels des Radarsenders 2.1 eine kontinuierliche Radarstrahlung gleichbleibender Frequenz und Amplitude abgestrahlt, die das Radarfeld 2.2 bestimmt. Eine kontinuierliche Geschwindigkeitsmessung bzw. eine Entfernungsmessung erfolgen durch Ausnutzung des Dopplerradareffektes bzw. des Frequenzumtastungsprinzips (FSK) in Auswertung der Phasendifferenz reflektierter Reflektionssignale unterschiedlicher Frequenz.

Der Simulator 3 wird durch die Simulatorsteuerung 3.1 so angesteuert, dass eine Prüfgeschwindigkeit simuliert wird. In diesem Simulationszustand ist das Radargerät 2 überprüfbar. Zum einen kann die bekannte simulierte Prüfgeschwindigkeit mit der durch das Radargerät 2 errechneten Geschwindigkeit auf Übereinstimmung geprüft werden. Zum anderen ist die bekannte relative Position des Simulators 3 im Radarfeld 2.2 mit der gemessenen Position des Simulators 3 vergleich- und überprüfbar.

Nach erfolgter Überprüfung können eine oder mehrere Geschwindigkeitsmessungen durchgeführt werden. Durch den Radarempfänger 2.3 wird von einem sich im Radarfeld 2.2 bewegenden Fahrzeug 9 reflektierte Radarstrahlung als Reflektionssignale empfangen und an die Steuerung 6 weitergeleitet. Die gemessene Geschwindigkeit des Fahrzeugs 9 wird mit einer zulässigen Höchstgeschwindigkeit verglichen. Bewegt sich das Fahrzeug 9 mit einer unzulässig hohen Geschwindigkeit, wird die Kamera 7 durch die Steuerung 6 angesteuert und eine Aufnahme des Fahrzeugs 9 gefertigt und zusammen mit den relevanten Messdaten (Ort, Zeit, Datum, Geschwindigkeit etc.) für eine spätere Auswertung und Bearbeitung abgespeichert.

In weiteren Ausführungen der Erfindung können auch mehrere Aufnahmen gefertigt werden.

Ein weiteres Verwendungsbeispiel des erfindungsgemäßen Verfahrens mittels der Vorrichtung wird ebenfalls anhand der Fig. 1 erläutert. Durch die Signaleinrichtung 4 und über die Datenleitung 5 wird eine Information über den aktuellen Schaltzustand "Rot" der Signaleinrichtung 4 an die Simulatorsteuerung 3.1 übermittelt. Aufgrund der Information wird der Simulator 3 durch die Simulatorsteuerung 3.1 angesteuert und ein erstes untypisches Geschwindigkeitsprofil simuliert, welches durch den Radarempfänger 2.3 empfangen, ausgewertet und an die Steuerung 6 weitergeleitet wird. Das erste untypische Geschwindigkeitsprofil besteht aus einer Abfolge alternierend simulierter Geschwindigkeiten von z. B. 50 - 150 - 50 - 150 - ...km/h. Jede Geschwindigkeit wird für die Dauer eines Radarimpulses simuliert.

Die untypischen Geschwindigkeitsprofile und die zugeordneten Schaltzustände sind als eine Zuordnungsvorschrift in der Steuerung 6 und in der Simulatorsteuerung 3.1 wiederholt abrufbar hinterlegt. Dabei ist jedes untypische Geschwindigkeitsprofil einem Schaltzustand der Signaleinrichtung 4 zugeordnet.

Außerdem kann in weiteren Ausführungen mindestens ein untypisches Geschwindigkeitsprofil dazu dienen, den Beginn und/oder die Beendigung der Simulation einer Prüfgeschwindigkeit zu signalisieren. Die Zuordnungsvorschrift enthält einen entsprechenden Eintrag.

Nach der Erfassung des ersten untypischen Geschwindigkeitsprofils wird dieses mit einer in der Steuerung 6 hinterlegten Zuordnung zu Schaltzuständen der Signaleinrichtung 4 verglichen und der aktuelle Schaltzustand "Rot" erkannt. Daraufhin wird die Kamera 7 bei jedem erfassten Fahrzeug 9 angesteuert und das Fahrzeug 9 dokumentiert, auch wenn die zulässige Höchstgeschwindigkeit eingehalten wurde. Es wird ein Rotlichtverstoß des Fahrzeugführers dokumentiert. Zugleich wird auch die gemessene Geschwindigkeit des Fahrzeugs 9 mit der zulässigen Höchstgeschwindigkeit verglichen und bei einer Überschreitung der zulässigen Höchstgeschwindigkeit neben dem Rotlichtverstoß auch die Geschwindigkeitsübertretung dokumentiert.

Wird ein zweites untypisches Geschwindigkeitsprofil (z. B. Abfolge von 30 - 300 - 30 - 300- ... km/h) erfasst, welches dem Schaltzustand "Grün" zugeordnet ist, wird nur dann die Kamera 7 angesteuert, wenn die gemessene Geschwindigkeit des Fahrzeugs 9 über der zulässigen Höchstgeschwindigkeit liegt.

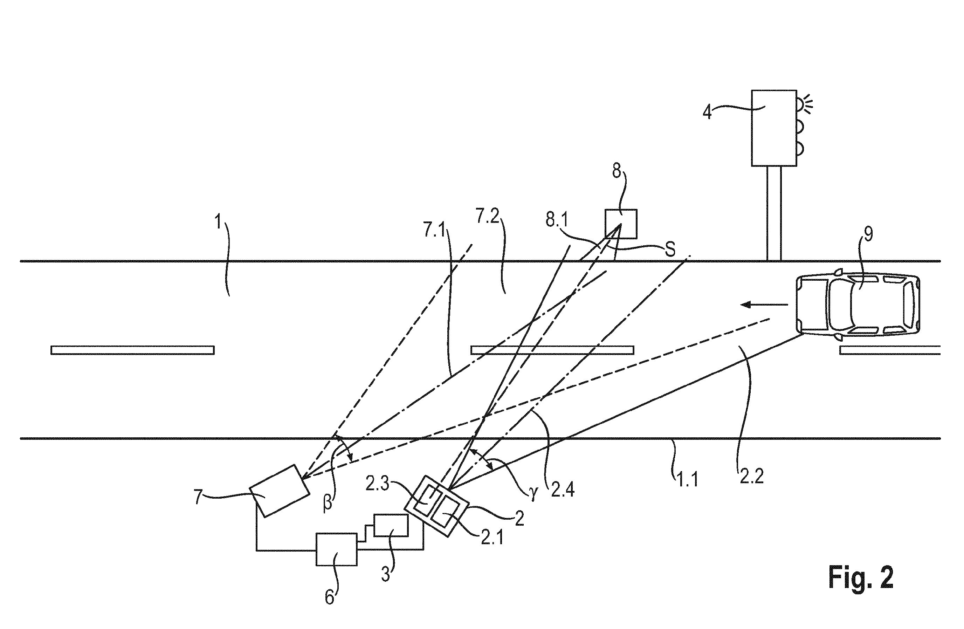

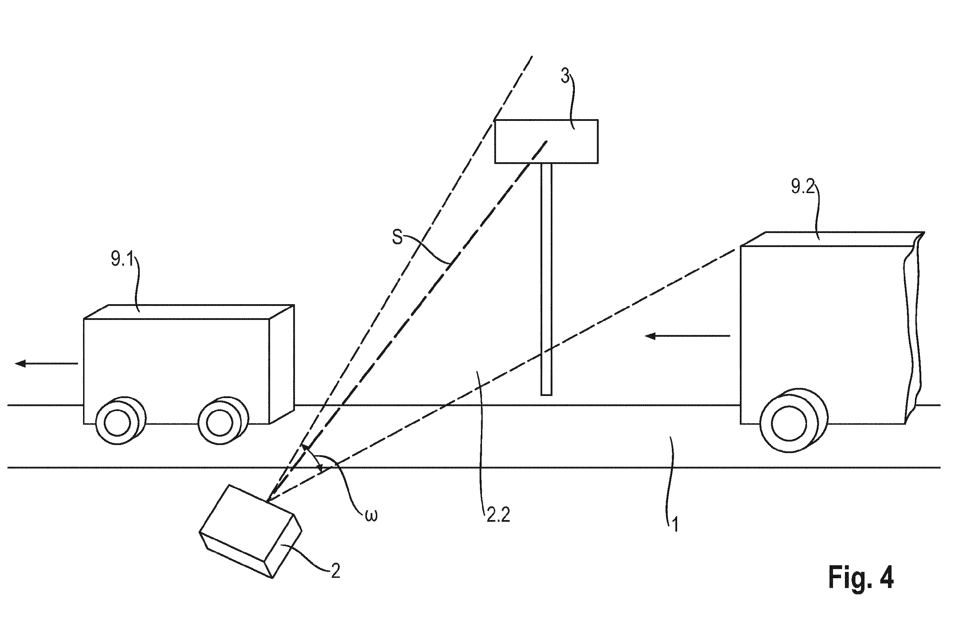

Eine weitere mögliche Verwendung der ersten erfindungsgemäßen Anordnung gemäß Fig. 1 besteht darin, dass eine Unterbrechung des Empfangs von Simulatorsignalen bei bekanntermaßen aktuell stattfindender Simulation als Information darüber bewertet wird, dass sich ein Fahrzeug 9 (nicht in dieser Position gezeigt) in der Sichtstrecke S (siehe Fign. 2 und 4) zwischen Simulator 3 und Radarempfänger 2.3 befindet. Ist ein Aufenthalt des Fahrzeugs 9 in der Sichtstrecke S zu dem Zeitpunkt der Erfassung nicht zulässig, wird die Kamera 7 durch die Steuerung 6 angesteuert und eine Aufnahme des Fahrzeugs 9 gefertigt.

Eine zweite Anordnung weist, wie in Fig. 2 dargestellt, einen Retroreflektor als Reflektor 8 auf, der an der dem Radargerät 2 gegenüberliegenden Seite der Fahrbahn 1 in dem Radarfeld 2.2 vorhanden ist. Die Radarstrahlung wird von dem Reflektor 8 anteilig in ein zweites Radarfeld 8.1 (nur dessen Bereich unmittelbar am Reflektor 8 gezeigt) reflektiert, in dem der Simulator 3 angeordnet ist. Der Simulator 3 ist hier oberhalb des Radargerätes 2 angeordnet (der Übersicht halber daneben gezeichnet) und mit der Steuerung 6 verbunden. Die Anbringungshöhe des Reflektors 8 ist so gewählt, dass die Sichtstrecke S zwischen dem Simulator 3 und dem Radarempfänger 2.3 dann unterbrochen ist, wenn sich ein Fahrzeug 9 in der Sichtstrecke S befindet, die hier eine einfache Richtungsänderung erfährt und von dem Simulator 3 zum Reflektor 8 und weiter zum Radarempfänger 2.3 verläuft. Von dem Simulator 3 gelangt die Radarstrahlung über den Reflektor 8 als Simulatorsignale wieder an den Radarempfänger 2.3 zurück. In dieser erfindungsgemäßen Anordnung ist das Radarfeld 2.2 vertikal einfach gefaltet.

Durch die zweite Anordnung kann ein nach dem FMCW-FSK-Prinzip arbeitendes Radargerät 2 dazu genutzt werden, Aufschluss über das Vorhandensein eines Objektes in der Sichtstrecke S zu erhalten.

In weiteren Ausführungen der erfindungsgemäßen Anordnung können eine andere Anzahl von Reflektoren 8 in anderen Anordnungen zueinander und/oder in unterschiedlichen Entfernungen und Winkeln zum Radargerät 2 vorhanden sein.

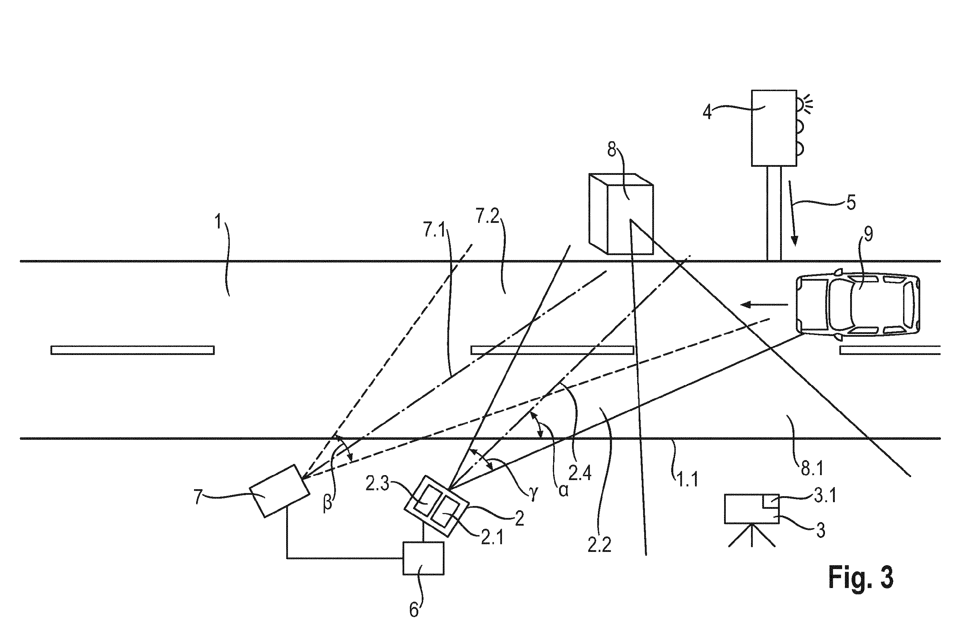

In einer in Fig. 3 gezeigten dritten Anordnung zur Verwendung des Simulators 3, ist neben den in Fig. 1 beschriebenen Elementen ein Reflektor 8 vorhanden, der in dem Radarfeld 2.2 aufgestellt ist und durch den ein Anteil der vom Radarsender 2.1 ausgesendeten Radarstrahlung reflektiert wird. Durch die von dem Reflektor 8 reflektierte Radarstrahlung ist das zweite Radarfeld 8.1 bestimmt, welches das Radarfeld 2.2 teilweise überlappt. Der Simulator 3 ist in dem zweiten Radarfeld 8.1 aufgestellt. Die von dem Simulator 3 simulierten Prüfgeschwindigkeiten und untypischen Geschwindigkeitsprofile sind über die von dem Simulator 3 auf den Reflektor 8 und anschließend von dem Reflektor 8 zum Radarempfänger 2.3 gelenkten Reflektionssignale erfassbar. In dieser erfindungsgemäßen Anordnung ist das Radarfeld 2.2 horizontal einfach gefaltet.

In weiteren Ausführungen können auch mehrere Reflektoren 8 unter verschiedenen Winkeln und/oder verschiedenen Höhen vorhanden und durch die Reflektoren 8 mehrere zweite Radarfelder 8.1 bestimmt sein. Es können außerdem mehrere Simulatoren 3 vorhanden und in einem, in mehreren oder in jeweils verschiedenen zweiten Radarfeldern 8.1 aufgestellt sein.

Fig. 4 zeigt lediglich die wesentlichen Elemente eines vierten Ausführungsbeispiels der erfindungsgemäßen Anordnung, bei dem der Simulator 3 an dem Rand 1.1 der Fahrbahn 1, der dem Radargerät 2 gegenüberliegt, erhöht angeordnet ist. Das stark schematisch gezeigte Radargerät 2 erzeugt ein Radarfeld 2.2 (nur die vertikale Ausdehnung ist angedeutet), das einen großen vertikalen Abstrahlwinkel ω aufweist. Die Sichtstrecke S steigt von dem bodennah aufgestellten Radargerät 2 zum Simulator 3 hin an, so dass die Sichtstrecke S über der Fahrbahn 1 in einer Höhe verläuft, die größer als die Höhe eines ersten Fahrzeugs 9.1 ist. Dieses bewegt sich durch das Radarfeld 2.2, ohne die Sichtstrecke S zu unterbrechen. Ein zweites Fahrzeug 9.2 besitzt eine Höhe, die größer als die Höhe der Sichtstrecke S über der Fahrbahn 1 ist. Befindet sich das zweite Fahrzeug 9.2 zwischen Radargerät 2 und Simulator 3, wird die Sichtstrecke S durch das zweite Fahrzeug 9.2 unterbrochen und es erfolgt eine Detektion des zweiten Fahrzeugs 9.2.

In einer nicht dargestellten Ausführung der erfindungsgemäßen Anordnung kann das erfindungsgemäße Verfahren auch dann angewandt werden, wenn die Signaleinrichtung 4 ein Matrixzeichen zur Anzeige einer aktuell zulässigen Höchstgeschwindigkeit ist. Je nach aktuell angezeigter Höchstgeschwindigkeit wird eine entsprechende Information über diese angezeigte Höchstgeschwindigkeit über die Datenleitung 5 an die Simulatorsteuerung 3.1 übermittelt und durch den Simulator 3 ein untypisches Geschwindigkeitsprofil simuliert, das der angezeigten Höchstgeschwindigkeit zugeordnet ist. Das Simulatorsignal des untypischen Geschwindigkeitsprofils wird durch den Radarempfänger 2.3 empfangen und an die Steuerung 6 geleitet, wo das Simulatorsignal mit der gespeicherten Zuordnung verglichen wird. Nach erfolgtem Vergleich ist die aktuell durch die Signaleinrichtung 4 angezeigte zulässige Höchstgeschwindigkeit bekannt. Aus empfangenen Reflektionssignalen von sich durch das Radarfeld 2.2 bewegenden Fahrzeugen 9 wird eine Geschwindigkeit des Fahrzeugs 9 abgeleitet und mit der aktuell angezeigten zulässigen Höchstgeschwindigkeit verglichen. Bei einer Überschreitung der zulässigen Höchstgeschwindigkeit wird die Kamera 7 durch die Steuerung 6 angesteuert und zur Dokumentation des Geschwindigkeitsverstoßes mindestens eine Aufnahme des Fahrzeugs 9 gefertigt.

Das erfindungsgemäße Verfahren und die Anordnung können beispielsweise in dem Bereich der Verkehrsüberwachung von fließendem und stehendem Verkehr eingesetzt werden. Es ist möglich, neben einer Überwachung und Dokumentation von Verkehrsverstößen auch die Anzahl und Größe der durch den Überwachungsbereich fahrenden Fahrzeuge 9 zu erfassen. Außerdem eignet sich die Erfindung, um als Bewegungsmelder verwendet zu werden.

### Bezugszeichen

- 1: Fahrbahn
- 1.1: Rand (der Fahrbahn 1)
- 2: Radargerät
- 2.1: Radarsender
- 2.2: Radarfeld
- 2.3: Radarempfänger
- 2.4: Radarachse
- 3: Simulator
- 3.1: Simulatorsteuerung
- 4: Signaleinrichtung
- 5: Datenleitung
- 6: Steuerung
- 7: Kamera
- 7.1: Kameraachse
- 7.2: Objektfeld
- 8: Reflektor
- 8.1: zweites Radarfeld
- 9: Fahrzeug
- 9.1: erstes Fahrzeug
- 9.2: zweites Fahrzeug
- S: Sichtstrecke
- α: Ausrichtwinkel (der Radarachse 2.4)
- β: Öffnungswinkel (der Kamera 7)
- γ: horizontaler Abstrahlwinkel (des Radarsenders 2.1)
- ω: vertikaler Abstrahlwinkel (des Radarsenders 2.1)

## Patentansprüche

1. Verfahren zur Erfassung eines Objektes in einem Radarfeld (2.2), bei dem in dem Radarfeld (2.2) eines Radargerätes (2), welches mit einem Radarsender (2.1) und einem Radarempfänger (2.3) ausgestattet ist, ein Simulator (3) ortsfest angeordnet wird, der geeignet ist, ein durch zeitlich aufeinanderfolgende Geschwindigkeitsänderungen bestimmtes Geschwindigkeitsprofil zu simulieren und der Simulator (3) so angesteuert wird, dass er wenigstens ein vorgegebenes, untypisches Geschwindigkeitsprofil simuliert, welches nicht durch ein erfassbares Objekt hervorgerufen werden kann, womit der Radarempfänger (2.3) zusätzlich zu Reflektionssignalen von sich durch das Radarfeld (2.2) hindurch bewegenden Objekten durch den Simulator (3) verursachte Simulatorsignale empfängt und aus diesen eine dem untypischen Geschwindigkeitsprofil zugeordnete Zustandsinformation abgeleitet wird.

2. Verfahren nach Anspruch 1, **dadurch gekennzeichnet, dass**
das Geschwindigkeitsprofil durch sich sprunghaft ändernde Geschwindigkeiten bestimmt ist.

3. Verfahren nach Anspruch 1 oder 2, **dadurch gekennzeichnet, dass**
aus dem unveränderten Empfang von Simulatorsignalen die Zustandsinformation abgeleitet wird, dass sich kein Objekt in einer Sichtstrecke (S) zwischen dem Radargerät (2) und dem Simulator (3) aufhält und entsprechend bei Nichtempfang die Zustandsinformation abgeleitet wird, dass sich wenigstens ein Objekt in der Sichtstrecke (S) befindet.

4. Verfahren nach Anspruch 1, 2 oder 3, **dadurch gekennzeichnet, dass**
aus dem Empfang unbestimmt veränderter Simulatorsignale die Zustandsinformation abgeleitet wird, dass eine Dejustierung des Radargerätes (2) erfolgt ist.

5. Verfahren nach einem der vorhergehenden Ansprüche, **dadurch gekennzeichnet,**
**dass** der Simulator (3) in zeitlicher Übereinstimmung mit sich ändernden Schaltzuständen einer verkehrsleitenden Signaleinrichtung (4) gezielt zur Simulation unterschiedlicher Geschwindigkeitsprofile angesteuert wird, um aus den unterschiedlichen Simulatorsignalen als Zustandsinformation die unterschiedlichen Schaltzustände ableiten zu können.

6. Verfahren nach einem der Ansprüche 1 bis 3 oder 5, **dadurch gekennzeichnet,**
**dass** in Abhängigkeit von den abgeleiteten Zustandsinformationen eine Kamera (7) dann angesteuert wird, wenn der Radarempfänger (2.3) Reflektionssignale empfängt.

7. Verfahren nach Anspruch 5, **dadurch gekennzeichnet, dass**
die unterschiedlichen Schaltzustände der Signaleinrichtung (4) eine Anzeige unterschiedlicher zulässiger Höchstgeschwindigkeiten betreffen und die unterschiedlichen Simulatorsignale jeweils für unterschiedliche zulässige Höchstgeschwindigkeiten stehen und mit aus den Reflektionssignalen abgeleiteten Geschwindigkeiten verglichen werden.

8. Anordnung zur Durchführung eines Verfahrens gemäß einem der vorhergehenden Ansprüche, **dadurch gekennzeichnet, dass**
mit einem ortsfest angeordneten Radargerät (2) mit einem Radarsender (2.1) und einem Radarempfänger (2.3), durch welches ein Radarfeld (2.2) festgelegt ist, und einem in dem Radarfeld (2.2) ortsfest angeordneten Simulator (3), der gemeinsam mit dem Radargerät (2) eine Sichtstrecke (S) bildet und der zur Simulation wenigstens eines vorgegebenen, untypischen Geschwindigkeitsprofils, welches keinem zu erwartenden, sich bewegenden Objekt zugeordnet werden kann und welches durch zeitlich aufeinanderfolgende Geschwindigkeitsänderungen bestimmt ist, geeignet ist, sowie einer Simulatorsteuerung (3.1) zur Ansteuerung des Simulators (3) zur Simulation verschiedener vorgegebener Geschwindigkeitsprofile.

9. Anordnung nach Anspruch 8, **dadurch gekennzeichnet, dass**
die Simulatorsteuerung (3.1) mit einer verkehrsleitenden Signaleinrichtung (4) in Verbindung steht, deren Schaltzustände sich ändern können und die Simulatorsteuerung (3.1) so ausgelegt ist, dass der Simulator (3) zeitgleich mit der Änderung des Schaltzustandes ansteuerbar ist, um bei unterschiedlichen Schaltzuständen unterschiedliche untypische Geschwindigkeitsprofile zu simulieren.

10. Anordnung nach Anspruch 8 oder 9, **dadurch gekennzeichnet, dass**
in der Sichtstrecke (S) zwischen Radargerät (2) und Simulator (3) mindestens ein Reflektor (8) angeordnet ist.

## Claims

1. Method for detecting an object in a radar field (2.2) in which a simulator (3) is arranged in a stationary manner in the radar field (2.2) of a radar device (2), having a radar transmitter (2.1) and a radar receiver (2.3), capable of simulating a speed profile which is defined by temporally consecutive speed changes, and the simulator (3) is actuated in such a way that it simulates at least one predetermined atypical speed profile which cannot be caused by a detectable object so that, in addition to reflection signals from objects moving through the radar field (2.2), the radar receiver (2.3) receives simulator signals caused by the simulator (3), and status information associated with the atypical speed profile is derived from these simulator signals.

2. Method according to claim 1, **characterized in that** the speed profile is determined by abruptly changing speeds.

3. Method according to claim 1 or 2, **characterized in that** status information is deduced from unchanged reception of simulator signals to the effect that there is no object located in the line of sight (S) between the radar device (2) and the simulator (3) and, correspondingly, when there is no reception, status information is deduced to the effect that at least one object is located in the line of sight (S).

4. Method according to claim 1, 2 or 3, **characterized in that** status information is deduced from the reception of indeterminately changed simulator signals to the effect that a misalignment of the radar device (2) has occurred.

5. Method according to one of the preceding claims, **characterized in that** the simulator (3) is selectively actuated for simulation of different speed profiles in timed correspondence to changing switch states of a traffic signal device (4) in order to deduce the different switch states as status information from the different simulator signals.

6. Method according to one of claims 1 to 3 or 5, **characterized in that**, depending on the deduced status information, a camera (7) is actuated when the radar receiver (2.3) receives reflection signals.

7. Method according to claim 5, **characterized in that** the different switch states of the signal device (4) relate to a display of different permissible maximum speeds, and the different simulator signals represent different permissible maximum speeds and are compared with speeds that were derived from the reflection signals.

8. Arrangement for carrying out a method according to one of the preceding claims, with a radar device (2) which is arranged in a stationary manner and which has a radar transmitter (2.1) and a radar receiver (2.3) and which determines a radar field (2.2), and with a simulator (3) which is arranged in a stationary manner in the radar field (2.2) and, together with the radar device (2), forms a line of sight (S) and is suitable for the simulation of at least one predefined atypical speed profile which cannot be associated with any expectable moving object and which is determined by temporally consecutive speed changes, and with a simulator control (3.1) for actuating the simulator (3) for simulation of different predefined speed profiles.

9. Arrangement according to claim 8, **characterized in that** the simulator control (3.1) communicates with a traffic signal device (4) whose switch states can change, and the simulator control (3.1) is configured so that the simulator (3) can be actuated simultaneous with the change in the switch state in order to simulate different atypical speed profiles during different switch states.

10. Arrangement according to claim 8 or 9, **characterized in that** at least one reflector (8) is arranged in the line of sight (S) between radar device (2) and simulator (3).

## Revendications

1. Procédé de détection d'un objet dans un champ radar (2.2) dans lequel un simulateur (3) est disposé de manière fixe dans le champ radar (2.2) d'un dispositif radar (2), ayant un transmetteur radar (2.1) et un récepteur radar (2.3), capable de simuler un profil de vitesse déterminé par des changements de vitesse qui se succèdent dans le temps, et le simulateur (3) est actionné de telle façon qu'il simule au moins un profil de vitesse atypique prédéterminé qui ne peut pas être causé par un objet détectable de façon que, en plus de signaux de réflexion d'objets qui se déplacent à travers le champ radar (2.2), le récepteur radar (2.3) reçoit des signaux de simulateur causés par le simulateur (3), et une information d'état associée au profil de vitesse atypique est dérivée de ces signaux de simulateur.

2. Procédé selon la revendication 1, **caractérisé en ce que** le profil de vitesse est déterminé par des vitesses changeant brusquement.

3. Procédé selon la revendication 1 ou 2, **caractérisé en ce que** l'information d'état est déduite de la réception inchangée de signaux de simulateur en effet qu'aucun objet se trouve dans la ligne de visée (S) entre le dispositif radar (2) et le simulateur (3) et, en conséquence, quand il n'y a pas de réception, l'information d'état est déduit en effet qu'au moins un objet est localisé dans la ligne de visée (S).

4. Procédé selon la revendication 1, 2 ou 3, **caractérisé en ce que** l'information d'état est déduit de la réception de signaux de simulateur changés de manière indéterminée en effet qu'un désalignement du dispositif radar (2) a été effectué.

5. Procédé selon une des revendications précédentes, **caractérisé en ce que** le simulateur (3) est actionné sélectivement pour la simulation de profils de vitesse différents en correspondance de temps avec des états de commutation changeants d'un dispositif de signaux (4) de circulation pour déduire les états de commutation différents comme information d'état des signaux de simulateur différents.

6. Procédé selon une des revendications 1 à 3 ou 5, **caractérisé en ce que**, selon l'information d'état déduite, une camera (7) est actionnée quand le récepteur radar (2.3) reçoit des signaux de réflexion.

7. Procédé selon la revendication 5, **caractérisé en ce que** les états de commutation différents du dispositif de signaux (4) se rapportent à un écran de vitesses maximales autorisées différentes, et les signaux de simulateur différents représentent des vitesses maximales autorisées différentes et sont comparés avec des vitesses qui ont été dérivées des signaux de réflexion.

8. Dispositif pour réaliser un procédé selon une des revendications précédentes, avec un dispositif radar (2) disposé de manière fixe et ayant un transmetteur radar (2.1) et un récepteur radar (2.3) et déterminant un champ radar (2.2), et avec un simulateur (3) qui est disposé de manière fixe dans le champ radar (2.2), et qui forme une ligne de visée (S) avec le dispositif radar (2), et qui est capable de simuler au moins un profil de vitesse atypique prédéterminé qui ne peut pas être associé à aucun objet en mouvement attendu et qui est déterminé par des changements de vitesse se succédant dans le temps, et avec un contrôle de simulateur (3.1) pour actionner le simulateur (3) pour la simulation de profils de vitesse prédéterminés différents.

9. Dispositif selon la revendication 8, **caractérise en ce que** le contrôle de simulateur (3.1) communique avec un dispositif de signaux (4) de circulation dont les états de commutation peuvent changer, et le contrôle de simulateur (3.1) est configuré de telle façon que le simulateur (3) peut être actionné simultanément au changement de l'état de commutation pour simuler des profils de vitesse atypiques différents pendant des états de commutation différents.

10. Dispositif selon la revendication 8 ou 9, **caractérise en ce que** au moins un réflecteur (8) est disposé dans la ligne de visée (S) entre le dispositif radar (2) et le simulateur (3).
